Europäisches Patentamt

European Patent Office

Office européen des brevets

(11) Veröffentlichungsnummer: **0 221 488**
**A2**

(12) **EUROPÄISCHE PATENTANMELDUNG**

(21) Anmeldenummer: 86114888.0

(22) Anmeldetag: 27.10.86

(51) Int. Cl.⁴: **A01K 51/00** , A01N 25/00

(30) Priorität: 31.10.85 DE 3538814

(43) Veröffentlichungstag der Anmeldung:
13.05.87 Patentblatt 87/20

(84) Benannte Vertragsstaaten:
AT BE CH DE ES FR GB GR IT LI LU NL SE

(71) Anmelder: VARROTEX GMBH & CO. KG
Brockhauserweg 12
D-4440 Rheine(DE)

(72) Erfinder: Knappwost, Adolf, Prof. Dr.
Am Pfarrgarten 3
D-3220 Alfeld(DE)

(74) Vertreter: Patentanwälte TER MEER - MÜLLER
- STEINMEISTER
Mauerkircherstrasse 45
D-8000 München 80(DE)

(54) Verfahren und Mittel zur Bekämpfung von Ektoparasiten.

(57) Verfahren und Mittel zur Bekämpfung von Ektoparasiten, gemäß dem der Parasitenträger während
einer zur Aufnahme einer ihn schädigenden Dosis
nicht ausreichenden Zeitdauer einer Gasatmosphäre
ausgesetzt wird, die mindestens eine narkotisch
und/oder toxisch wirkende Substanz in hoher Konzentration enthält, und die aufgrund der spezifisch
höheren aufgenommenen Dosis betäubten bzw. abgetöteten Ektoparasiten von dem Parasitenträger getrennt werden.

EP 0 221 488 A2

## Verfahren und Mittel zur Bekämpfung von Ektoparasiten

Gegenstand der Erfindung sind ein Verfahren und ein Mittel zur Bekämpfung von Ektoparasiten, insbesondere von Ektoparasiten der Honigbiene, wie der Varroa-Milbe, ein Mittel zur Durchführung dieses Verfahrens sowie die Verwendung von narkotisch und/oder toxisch wirkenden Substanz mit hohem Dampfdruck zur selektiven Bekämpfung dieser Ektoparasiten auf dem Parasitenträger.

Eine Reihe von Nutztieren wird von Ektoparasiten, d. h. Schmarotzer, die dem Nutztier außen aufsitzen, befallen und dabei geschädigt, was zu erheblichen wirtschaftlichen Verlusten führt. So wird beispielsweise die Honigbiene von verschiedenen Ektoparasiten befallen, von denen die Varroa-Milbe schwersten Schaden dadurch anrichtet, daß sie die von ihr befallenen Bienenvölker in zwei bis maximal drei Jahren zugrunde richtet. Zur Bekämpfung dieser Varroa-Milbe werden und wurden verschiedene Mittel eingesetzt, die selektiv auf die Varroa-Milbe wirken und die Biene nur wenig - schädigen sollen. Die Schwierigkeit bei der Anwendung dieser Mittel besteht einerseits darin, daß sie nicht nur selektiv wirken sollen, sondern daß sie andererseits auch keinen Rückstand im Honig oder im Wachs hinterlassen dürfen.

Deshalb ist die Zahl der bisher angewandten und zugelassenen Mittel sehr klein. Darüber hinaus sind sie nicht hinreichend wirksam, so daß die Zahl der zugrunde gehenden Bienenvölker ständig zunimmt. Weiterhin ist grundsätzlich bei sehr selektiv wirkenden Mitteln, wie selektiven Akariziden, mit einer frühen Ausbildung einer Resistenz der zu bekämpfenden Milben zu rechnen.

Das bisher in der Bundesrepublik Deutschland zugelassene Akarizid (Folbex VA Neu = 4,4'-Dibrombenzilsäureisopropylester) hinterläßt auch bei vorschriftsmäßiger Anwendung im Bienenwachs einen Rückstand von 100 bis 300 mg/kg. Abgesehen davon, daß die Anwendung dieses Präparats sehr zeitaufwendig ist (mehr als vier Behandlungen von einer Stunde pro Bienenvolk) und daß nur wenige Abende des Oktobers für seine Anwendung geeignet sind (aufgrund des dann auftretenden Zusammenfindens des Bienenvolkes), wird dieses Präparat wegen des starken Rückstands von den meisten Imkern abgelehnt.

Ein in der Bundesrepublik Deutschland nicht zugelassenes Präparat (Amitraz = N-Methylbis-(2,4-xylyliminomethyl)amin ist zwar wirksam, erfordert jedoch für seine Anwendung einen kostspieligen Zerstäubungsapparat. Da es sich bei dem Wirkstoff um eine feste Substanz mit einem sehr kleinen Dampfdruck von wesentlich unterhalb 1 mbar handelt, wird der Wirkstoff in einem Mineralöl gelöst, worauf die erhaltene Lösung in Wasser emulgiert wird, die ihrerseits mit Hilfe des Zerstäubungsapparats auf die Bienen aufgestäubt wird. Aufgrund des sehr niedrigen Dampfdrucks dieses Wirkstoffs lassen sich Rückstände dieses Akarizids in dem Honig und dem Wachs nicht vermeiden. Sie gelten zudem als kanzerogen.

Neuerdings werden auch Pyrethrum-Präparate zur Bekämpfung der Varroa-Milbe untersucht. Sie haben mit den vorgenannten Mitteln gemeinsam, daß sie aufgrund ihres zu geringen Dampfdrucks nicht aus dem Bienenwachs und dem Honig verdampfen und daher einen unerwünschten Rückstand bilden.

Wegen der physiologischen Bedenklichkeit der vorgenannten Wirkstoffe ist neuerdings eine Behandlung der verseuchten Bienenvölker mit einer 60 %-igen Ameisensäure zugelassen worden. Abgesehen davon,daß mit Ameisensäure getränkte Platten wochenlang in der "Beute", d. h. dem Bienenkasten verbleiben und wirken müssen, ist der Rückstand der Amei sensäure im Honig derart groß, daß das Mittel, wie auch die oben genannten Wirkstoffe, während der Trachtzeit, d.h. der Honigsammelzeit, nicht angewendet werden darf.

Die Aufgabe der vorliegenden Erfindung besteht somit darin, ein Verfahren und ein Mittel anzugeben, mit dem es in einfacher Weise gelingt, die befallenen Parasitenträger von den unerwünschten Ektoparasiten zu befreien, namentlich die befallenen Bienenvölker von den Varroa-Milben, ohne daß dadurch der Parasitenträger geschädigt wird und ohne daß schädliche Wirkstoffreste in den erwünschten Produkten, wie Honig oder Wachs, zurückbleiben. Dabei soll die Bekämpfung jederzeit möglich und wiederholbar sein und keine aufwendigen Mittel und Vorrichtungen notwendig machen.

Diese Aufgabe wird nun gelöst durch die kennzeichnenden Merkmale des Verfahrens gemäß Hauptanspruch.

Gegenstand der Erfindung ist daher ein Verfahren zur Bekämpfung von Ektoparasiten gemäß Anspruch 1, ein Mittel zu seiner Durchführung gemäß Anspruch 9 sowie die Verwendung bestimmter narkotisch und/oder toxisch wirkender Substanzen zur Durchführung dieses Verfahrens gemäß Anspruch 11.

Gegenstand der Erfindung ist somit ein Verfahren zur Bekämpfung von Ektoparasiten und namentlich von Ektoparasiten der Honigbiene, wie insbesondere der Varroa-Milbe, welches dadurch gekennzeichnet, ist, daß der Parasitenträger bzw. das Bienenvolk während einer zur Aufnahme einer ihn schädigenden Dosis nicht ausreichenden Zeitdauer einer Gasatmosphäre ausgesetzt wird, die mindestens eine narkotisch und/oder toxisch wirkende Substanz in hoher Konzentration enthält, und die aufgrund der spezifisch höheren aufgenommenen Dosis betäubten bzw. abge töteten Ektoparasiten von dem Parasitenträger getrennt werden.

Diese selektive Betäubung bzw. Abtötung der Ektoparasiten ergibt sich dadurch, daß der Wirkstoff während der Behandlung in Gasform auf den Parasitenträger und den Ektoparasiten einwirkt, wobei der letztere aufgrund seiner wesentlich größeren spezifischen Oberfläche in der gleichen Zeiteinheit eine wesentlich größere spezifische Dosis aufnimmt, die für den Ektoparasiten damit die Dosis überschreitet, die zur Betäubung bzw. zur Abtötung ausreicht, während der Parasitenträger ein wesentlich niedrigeres Oberflächen/Volumen-Verhältnis aufweist und nicht geschädigt, sondern allenfalls betäubt wird.

Die Selektivität bei dem erfindungsgemäßen Verfahren beruht somit nicht auf der Auswahl eines selektiv wirksamen Moleküls, sondern wird auf physikalisch-chemischem Wege dadurch erreicht, daß bei der angewandten Kurzzeitbehandlung, die vorzugsweise etwa eine Minute dauert, sich jedoch bis zu einer Stunde erstrecken kann, die Konzentration des wirksamen Agens in dem Parasitenträger niedriger ist als in dem Ektoparasiten, so daß der letztere stark narkotisiert oder geschädigt wird, während die Konzentration in dem Parasitenträger hinreichend klein bleibt, woduch eine Schädigung des Parasitenträgers ausgeschlossen wird. Dieser Effekt wird durch die Nutzung des großen Unterschieds im Oberflächen/Volumen-Verhältnis von Ektoparasit zu Parasitenträger erreicht. Im Fall der Varroa-Milbe als Ektoparasit und der Biene als Parasitenträger beträgt das Verhältnis der Oberfläche der Tracheen, über die der gasförmige bzw. dampfförmige Wirkstoff aufgenommen wird, zum Volumen der Tiere, welches Verhältnis die zeitliche Zunahme der Konzentration des Wirkstoffs in der Körperflüssigkeit bestimmt, nach eigenen Untersuchungen bei der Varroa-Milbe etwa das 20-fache gegenüber dem jenigen der Biene. Diese physikalisch-chemisch begründete Selektivität ermöglicht eine große Mannigfaltigkeit in der Auswahl der Mittel und schließt ein Resistentwerden der Ektoparasiten weitgehend aus.

Vorzugsweise werden bei dem erfindungsgemäßen Verfahren daher Behandlungsdauer und Konzentration der mindestens einen narkotisch und/oder toxisch wirkenden Substanz in Abhängigkeit von dem unterschiedlichen Oberflächen/Volumen-Verhältnis von Parasitenträger bzw. Ektoparasit derart ausgewählt, daß zwar der Ektoparasit, nicht aber der Parasitenträger betäubt bzw. abgetötet wird. Dabei wird der Parasitenträger vorteilhaft in einer Kurzzeitbehandlung einem Konzentrationsstoß der mindestens einen narkotisch und/oder toxisch wirkenden Substanz ausgesetzt.

Als narkotisch und/oder toxisch wirkende Substanz wird erfindungsgemäß vorzugsweise eine solche Substanz eingesetzt, die einen hohen Dampfdruck entsprechend einem Siedepunkt von unter 100°C und vorzugsweise unter 90°C aufweist, da hierdurch ohne weiteres das Ansammeln von unerwünschten Rückständen in den Parasitenträger bzw. dessen Produkten, wie dem Honig oder dem Wachs der Biene, vermieden werden kann. Als narkotisch und/oder toxisch wirkende Substanzen können dabei namentlich Inhalationsnarkotika und weniger narkotisch wirkende, aber toxische Substanzen eingesetzt werden, die, wie beispielsweise der Cyanwasserstoff, nach nicht letaler Dosis keinen merklichen oder nur einen reversiblen Schaden an dem Parasitenträger, wie beispielsweise der Biene, hinterlassen. Geeignete Substanzen dieser Art sind daher stark flüchtige Alkohole, Ether, Ketone, Kohlenwasserstoffe und substituierte Kohlenwasserstoffe, Thioalkohole, Thioether, Nitrile, Kohlendisulfid, Cyanwasserstoff, Inhalationsnarkotika oder Mischungen dieser Verbindungen. Besonders bevorzugt sind er findungsgemäß Diethylether, Propan, Butan, Pentan, Hexan und deren Isomeren, wie Cyclopropan, Ethylen, Acetylen, Dichlormethan, Chloroform, Halothan, Lachgas, Cyanwasserstoff und Kohlendisulfid, welche Verbindungen einzeln oder in Form von Mischungen eingesetzt werden können.

Da die erfindungsgemäß eingesetzten narkotisch und/oder toxisch wirkenden Substanzen, die in der Dampf-oder in der Gasform zur Anwendung kommen, keine Rückstände in dem Parasitenträger bzw. dessen Produkten hinterlassen, kann die Behandlung des Parasitenträgers zu beliebigen Zeitpunkten durchgeführt werden, d. h. auch dann, wenn die gewünschten Produkte gesammelt bzw. gebildet werden. So ist die Behandlung der Bienenvölker auch während der Trachtzeit möglich, was wegen der zu starken Vermehrung der Varroa-Milben von Oktober bis zum Oktober des folgenden Jahres entscheidend wichtig ist.

Da bei dem erfindungsgemäßen Verfahren die stark flüchtigen Wirksubstanzen in der Dampfform bzw. in der Gasform eingesetzt werden, sind keine aufwendigen Vorrichtungen notwendig und es ist möglich, die Behandlung in kurzer Zeit durchzuführen, beispielsweise innerhalb einer Minuten, wenngleich Behandlungsdauern bis zu einer Stunde möglich sind.

Mit Vorteil führt man die Behandlung in der Weise durch, daß der Parasitenträger, wie beispielsweise das Bienenvolk, in einem geschlossenen Raum, beispielsweise der "Beute", einem Gasstrom ausgesetzt wird, der mindestens eine narkotisch und/oder toxisch wirkende, verdampfte oder gasförmige Substanz enthält, wonach die abgefallenen, narkotisierten und/oder abgetöteten Ektoparasiten beseitigt werden.

Ein weiterer Gegenstand der Erfindung ist ein Mittel zur Durchführung des Verfahrens, welches gekennzeichnet ist durch einen Gehalt an mindestens einer der oben beschriebenen, narkotisch und/oder toxisch wirkenden, verdampfbaren oder gasförmigen Substanz. Dabei kann das Mittel auch Vorläufer der narkotisch wirkenden und/oder gasförmigen Substanz enthalten, wie beispielsweise Calciumcarbid, aus dem in einfacher Weise durch Zugabe von Wasser Acetylen freigesetzt werden kann, welches mit Hilfe eines Gasstroms dem zu behandelnden Parasitenträger zugeführt wird.

Die Erfindung betrifft schließlich auch die Verwendung von narkotisch und/oder toxisch wirkenden Substanzen mit einem hohen Dampfdruck entsprechend einem Siedepunkt unter 100°C zur selektiven Bekämpfung von Ektoparasiten auf dem Parasitenträger.

Die folgenden Beispiele dienen der weiteren Erläuterung der Erfindung.

Beispiel 1

Man setzt ein von Varroa-Milben befallenes Bienenvolk in der Beute mittels eines Warmluftgebläses ("Föhn") über einen Schlauch mit einer lichten Weite von etwa 5 cm einem Warmluftstrom (35°C) aus, der in einer Menge von 20 I pro Minute zugeführt wird. Dieser Luftstrom wird durch Auftropfen von 5 ml $CS_2$ auf ein im Schlauch liegendes Stück Kunststoff-oder Glasfaservlies während einer Minute mit $CS_2$-Dampf dotiert. Der größte Teil der Bienen wird kurzzeitig narkotisiert, während die Varroa-Milben von den Bienen abfallen und auf einem gefetteten Papier unterhalb eines Draht-oder Kunststoffsiebs aufgefangen werden. Dabei fallen etwa 95 % der Varroa-Milben ab.

Die Bienen wachen nach kurzer Zeit (etwa nach einer Minute) wieder auf und erscheinen nicht beeinträchtigt.

Wenn man bei der halben Strömungsgeschwindigkeit nur die Hälfte der $CS_2$-Menge innerhalb einer Minute auf das Kunststoff-oder Glasfaservlies auftropft und verdampft, so fallen die Bienen nicht in Narkose, während etwa 50 % der Varroa-Milben abfallen. Daher entfaltet ein gegebenes Produkt aus Konzentration und Einwirkungszeit also nicht die gleiche Wirkung, so daß es ohne weiteres möglich ist, durch gezielte Änderung der Bedingungen die Dosis auszuwählen, die zwar die Ektoparasiten abtötet, den Parasitenträger aber nicht schädigt.

Beispiel 2

In einem Zuleitungsrohr zur Beute des zu behandelnden Bienenvolks, durch welches ein Warmluftstrom (35°C) in einer Menge von 20 l/min geführt wird, wird ein Schälchen mit 10 g pulverförmigen Calciumcarbid eingebracht, in welches mittels einer Injektionsspritze 20 ml angewärmtes Wasser im Verlaufe von 1 Minute zugesetzt werden.

Die durch die Einwirkung von Acetylen abgefallenen Varroa-Milben werden auch hier auf einem gefetteten Papier unterhalb eines für die Bienen undurchlässigen Siebs aufgefangen.

## Ansprüche

1.) Verfahren zur Bekämpfung von Ektoparasiten, dadurch gekennzeichnet, daß der Parasitenträger während einer zur Aufnahme einer ihn - schädigenden Dosis nicht ausreichenden Zeitdauer einer Gasatmosphäre ausgesetzt wird, die mindestens eine narkotisch und/oder toxisch wirkende Substanz in hoher Konzentration enthält, und die aufgrund der spezifisch höheren aufgenommenen Dosis betäubten bzw. abgetöteten Ektoparasiten von dem Parasitenträger getrennt werden.

2.) Verfahren nach Anspruch 1, dadurch gekennzeichnet, daß Behandlungsdauer und Konzentration der mindestens einen narkotisch und/oder toxisch wirkenden Substanz in Abhängigkeit von dem unterschiedlichen Oberflächen/Volumen-Verhältnis von Parasitenträger bzw. Ektoparasit derart ausgewählt werden, daß zwar der Ektoparasit nicht aber der Parasitenträger betäubt bzw. abgetötet wird.

3.) Verfahren nach Anspruch 1 oder 2, dadurch gekennzeichnet, daß der Parasitenträger in einer Kurzzeitbehandlung einem Konzentrationsstoß der mindestens einen narkotisch und/oder toxisch wirkenden Substanz ausgesetzt wird.

4.) Verfahren nach mindestens einem der vorhergehenden Ansprüche, dadurch gekennzeichnet, daß die narkotisch und/oder toxisch wirkende Substanz in Dampf-oder Gasform in der Gasatmosphäre vorliegt.

5.) Verfahren nach mindestens einem der vorhergehenden Ansprüche, dadurch gekennzeichnet, daß eine narkotisch und/oder toxisch wirkende Substanz mit einem hohen Dampfdruck entsprechend einem Siedepunkt unter 100°C und vorzugsweise unter 90°C verwendet wird.

6.) Verfahren nach Anspruch 5, dadurch gekennzeichnet, daß als narkotisch und/oder toxisch wirkende Substanz stark flüchtige Alkohole, Ether, Ketone, Kohlenwasserstoffe, Thioalkohole, Thioether, Nitrile, Kohlendisulfid, Cyanwasserstoff, Inhalationsnarkotika oder Mischungen dieser Verbindungen eingesetzt werden.

7.) Verfahren nach Anspruch 6, dadurch gekennzeichnet, daß als narkotisch und/oder toxisch wirkende Substanz Diethylether, Propan, Butan, Pentan, Hexan und deren Isomeren, wie Cyclopropan, Ethylen, Acetylen, Dichlormethan, Chloroform, Halothan, Lachgas, Cyanwasserstoff und Kohlendisulfid einzeln oder in Form von Mischungen eingesetzt werden.

8.) Verfahren nach mindestens einem der vorhergehenden Ansprüche, dadurch gekennzeichnet, daß der Parasitenträger in einem geschlossenen Raum einem die narkotisch und/oder toxisch wirkende, verdampfte oder gasförmige Substanz enthaltenden Gasstrom ausgesetzt wird und die abgefallenen, narkotisierten und/oder abgetöteten Ektoparasiten beseitigt werden.

9.) Mittel zur Durchführung des Verfahrens gemäß den Ansprüchen 1 bis 8, gekennzeichnet durch, einen Gehalt an mindestens einer narkotisch und/oder toxisch wirkenden, verdampfbaren oder gasförmigen Substanz.

10.) Mittel nach Anspruch 9, gekennzeichnet durch, einen Gehalt an mindestens einer Verbindung aus der Diethylether, Propan, Butan, Pentan, Hexan und deren Isomeren, wie Cyclopropan, Ethylen, Acetylen, Chloroform, Halothan, Lachgas, Cyanwasserstoff und Kohlendisulfid umfassenden Gruppe.

11.) Verwendung von narkotisch und/oder toxisch wirkenden Substanzen mit einem hohen Dampfdruck entsprechend einem Siedepunkt unter 100°C zur selektiven Bekämpfung von Ektoparasiten auf dem Parasitenträger.

12.) Verwendung nach Anspruch 11, gekennzeichnet durch, den Einsatz von Diethylether, Propan, Butan, Pentan, Hexan und deren Isomeren, wie Cyclopropan, Ethylen, Acetylen, Dichlormethan, Chloroform, Halothan, Lachgas, Cyanwasserstoff und/oder Kohlendisulfid.